Europäisches Patentamt

European Patent Office

Office européen des brevets

(19)

(11) Publication number: **0 511 494 A2**

# EUROPEAN PATENT APPLICATION

(12)

(21) Application number: **92105222.1**

(22) Date of filing: **26.03.92**

(51) Int. Cl.⁵: **B60Q 1/26**

(30) Priority: **29.03.91 IT MI910276 U**

(43) Date of publication of application:
**04.11.92 Bulletin 92/45**

(84) Designated Contracting States:
**AT BE CH DE DK ES FR GB GR LI LU MC NL PT SE**

(71) Applicant: **Menichini, Franco**
**Via Massarenti 15**
**I-20148 Milano(IT)**
Applicant: **Zancocchia, Fausto**
**Via Po, 1**

**I-63019 S. Elpidio a Mare (Ascoli Piceno)(IT)**

(72) Inventor: **Menichini, Franco**
**Via Massarenti 15**
**I-20148 Milano(IT)**
Inventor: **Zancocchia, Fausto**
**Via Po, 1**
**I-63019 S. Elpidio a Mare (Ascoli Piceno)(IT)**

(74) Representative: **Lunati, Vittoriano**
**LUNATI & MAZZONI S.a.s. Via Carlo**
**Pisacane, 36**
**I-20129 Milano(IT)**

(54) **A multi-purpose signalling device for vehicles, in particular cars.**

(57) A multi-purpose signalling device for vehicles, in particular cars, comprising a displayer panel (2) having a display surface (3) exhibiting a plurality of selectively operable signalling elements (4), the displayer panel (2) being arranged on a vehicle (5) so as to have its display surface (3) exposed to the outside of the vehicle (5), control means (7) for the displayer panel (2) adapted to selectively operate the signalling elements (4) and comprising at least a control element (8) which can be reached from a driver's seat (5c) of the vehicle (5), and electronic circuits (9) arranged between said control element (8) and said display surface (3) and adapted to store a plurality of signals and notices, an electric power circuit (13).

Fig.1

EP 0 511 494 A2

The present invention relates to a multi-purpose signalling device for vehicles, in particular cars, adapted both to be part of the permanent equipment of said vehicles and to be installed on vehicles as an accessory component thereof. It is known that presently vehicles circulating on roads are provided with some outwardly-oriented signalling members, such as various lights, direction indicator flashers and acoustic signallers.

Other signalling members currently available are red warning triangles and parking discs.

One feature common to all these signalling devices is that they represent either a too general and undifferentiated warning as in the case of acoustic signallers or, on the contrary, a too specific and definite warning, that is capable of fulfilling one function only, as for example in the case of stop lights, direction indicator flashers, red warning triangles and parking discs.

Practically, there are presently no signalling devices for vehicles that, while enabling a clear interpretation, are at the same time multi-purpose devices, that is capable of representing a large variety of signals and notices or warnings.

The foregoing is proved by the fact that when even rather usual signallings are to be shown, it is necessary to resort to empirically-made signals which often are not very clear and at all events are always limited to a specific notice or warning.

For instance, for signalling that vehicles are driven by an an inexperienced driver, a physician or others, that there is a newborn baby in it, that an emergency situation is taking place, or that a particular function is being performed at the moment, such as a first aid operation, a particular service and so on, it is necessary to resort to signs or the like to be applied to the vehicle in a hazardous manner and at a location as much as possible visible.

It is obvious that a clear and multi-purpose signalling device that is also capable of displaying all the above mentioned notices would be very efficient and useful above all as far as car circulation is concerned, as it would enable a driver to confront all possible situations.

Ideally, a multi-purpose signalling device is efficient not only if it adapts itself to a wide variety of notices, but also if it is capable of modifying said notices in an immediate and timely manner, depending upon current requirements, being at the same time well visible and adapted to be interpreted with the greatest clarity and certitude, so that no doubts or uncertainties may exist as regards the notice, even when the information to be given is relatively complicated.

These features would also put the vehicle's driver in a position to set up an active communication or dialogue with the surrounding environment, in particular with other vehicles' drivers provided with the device of the invention as well.

Under this situation it is an object of the invention to provide a multi-purpose signalling device that can be easily adapted to all types of vehicles even as an accessory part thereof and is capable of remedying the above drawbacks of the known art while offering flexibility in use, immediacy in changing notices upon command, and maximum visibility and clearness in the notices themselves.

The above object is substantially attained by a multi-purpose signalling device for vehicles, in particular cars, as defined in claim 1.

The description of a preferred embodiment of a device in accordance with the invention is given hereinafter with reference to the accompanying drawings, in which:

Figure 1 is a general view of the device of the invention;

Figure 2 depicts an application of such a device; and

Figure 3 shows a keyboard control for the device in question located in the region of the vehicle steering wheel.

Referring to the drawings, the device of the invention has been generally identified by reference numeral 1.

It comprises a substantially flattened rectangular displayer panel 2, extending in a predominant direction.

The displayer panel 2 is provided on one face thereof with a display surface 3 substantially in the form of a strip and essentially defined by a plurality of signalling elements 4 disposed in a matrix-like manner and capable of being selectively operated between at least two different conditions or states that are differentiated from each other by their different optical effects.

Preferably the signalling elements 4 are light emitting elements, in particular light emitting diodes, usually referred to as LEDs, in which the activation or switching on conditions and deactivation or switching off conditions are alternately provided.

LEDs are intended independent of, and disposed close to, each other so as to substantially define the display surface 3.

Alternatively the signalling elements 4 may be liquid crystals engaging the display surface 3 and drivingly changing state.

The displayer panel 2 is positioned on a vehicle 5, typically a car, at any appropriate location, at the inside or outside of the vehicle itself, provided that the display surface 3 may be seen from the outside.

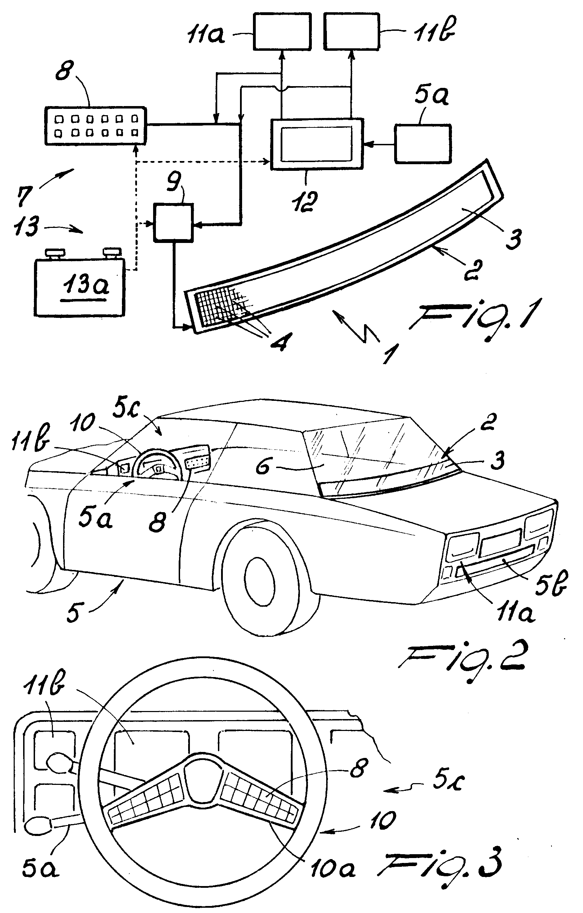

In the embodiment shown in Fig. 2, the display surface 3 is disposed almost flush with the vehicle's outer surface, at the glazing thereof.

In particular, an advantageous location on the vehicle's glazing is at the base of the rear window 6: this position lends itself to indifferently receive either a panel arranged originally as part of the vehicle or a subsequently-added panel, as an accessory component thereof.

According to another arrangement which is particularly appropriate if the displayer panel 2 is applied when the vehicle 5 is being constructed, said displayer panel 2 is directly integrated in the car body.

For example, many cars currently have wide bands or stripes **5b** of reflecting material at the rear part thereof.

These stripes can be replaced by the displayer panel 2 which can be embodied so as to be light-reflective.

As shown in the drawings, the device 1 further comprises control means **7** for the displayer panel 2, adapted to selectively operate the signalling elements 4.

This control means 7 comprises at least a control element **8**, typically a keyboard, which can be reached from the inside of the vehicle 5 and in particular from the driver's seat **5c**.

In Fig. 2 the keyboard 8 is engaged to the vehicle dashboard of the vehicle 5, realized by a car, whereas in Fig. 3 it is directly integrated in the car steering wheel **10**, in particular in spokes **10a** of said steering wheel 10, so that it may be used during the drive as well.

The control element or keyboard 8 is connected to electronic circuits **9**, as shown in Fig. 1, which are disposed intermediate the control element 8 and the display surface 3 of the displayer panel 2.

In known manner said electronic circuits 9 are comprised of storage circuits for storing a plurality of signals and notices to be individually recalled through the keyboard 8 by depressing appropriate keys or key sequences.

The electronic circuits 9 are also connected to outer and inner signalling members **11a, 11b** of known type and already present in the vehicle 5, in order to generate signals on the displayer panel 2 which are synchronous and congruent with those of the signalling members themselves.

In more detail, the electronic circuits 9, in the absence of different arrangements input through the keyboard 8, can receive and process signals, pulses or drives that an electric control circuit **12** of vehicle 5, known per se, sends to outer and inner signalling members, 11a and 11b respectively. By outer signalling members it is intended those located at the outside of vehicle 5 and by inner signalling members those disposed at the driver's seat 5c.

Since the electric control circuit 12 is interlocked, among other things, to common drive controls **5a**, pratically the displayer panel 2 is operated not only by the keyboard 8, but also by said drive controls 5a.

The outer signalling members 11a in particular comprise the outer signalling lights of vehicle 5 and hence, concurrently with the direction signals, on the display surface 3 it is possible for example to exhibit arrows or written notices such as "be careful: turning to the right" or "be careful: turning to the left".

Likewise, the whole display surface 3 might either lighten or carry an appropriate invitation to slow down in case of braking, or flash, or signal an "emergency", should all indicators be activated.

The inner signalling members 11b in particular include signals on the vehicle dashboard 5.

Thus, under certain situations, the display surface 3 can for example show the vehicle speed indicated on the driver's dashboard and this for the purpose of both facilitating the other vehicles' manoeuvring and showing, in case of checks, the actual speed appearing to the vehicle's driver.

Finally, Fig. 1 shows that the device 1 is preferably power supplied from the same power circuit **13** supplying electricity to vehicle 5 and which is usually connected to a battery **13a**.

However other electric energy sources independent of vehicle 5 are also possible and they are based on batteries and photovoltaic cells.

Operation of the device is as follows.

Even in the absence of particular commands from the keyboard, the device can perform an auxiliary useful function if it receives signals emitted from the electric control circuit 12 of the vehicle, as above stated. In fact it can emphasize the traditional signals normally available in a vehicle.

The primary function of the device 1 is however that of placing an unlimited variety of outwardly-oriented signals and notices at the driver's disposal, which signals may also be exclusively temporary, such as to make the device itself comparable to a universal "interface".

In fact, notices of various types can be quickly given or alternated, from the semipermanent ones identifying an association or business concern to which the vehicle belongs, to the extemporary ones such as a notice of the type "I will be back soon" and/or a telephone number on a car obliged to stop for emergency.

A great variety of notices can accomplish essential functions for other drivers: for example notices informing that the car is part of an escort, a procession or march, or a press service; that it is driven by a physician or an inexperienced driver, that there is a newborn baby in it or a person needing a smooth drive.

Of fundamental importance are then danger warnings addressed to other drivers such as "open door", "smoke from the boot", "half-deflated tyre" or others, or, on the contrary, possible demands for information or help.

For drivers that do not know each other but need to identify each other, the device offers a decisive solution.

In addition to courtesy signals, signals involving even very precise and compulsory obligations are possible too, such as those shown by vehicles belonging to police and the like. Not excluded and even convenient are also those signals that seem to be merely related to games, for example those connected with a sports exhibition, a mass meeting or a holiday. In fact these signals indirectly inform the other drivers that by going on the same way they are at least exposed to the risk of being absorbed in a traffic jam.

The device of the invention can also advantageously replace a parking disc.

It is pointed out that most of these signals can be stored in advance so that sending them does not create greater trouble to the driver than sending normal directionals. On the other hand, due to the keyboard position that can be also arranged integrated in the steering wheel, the preparation of a message is not difficult for the driver.

In preparing a message it is not important the length thereof, in that a written notice exceeding the length of the display surface 3 can be automatically shown by making the written notice slide along the display surface.

The invention attains important advantages.

In fact by the device of the invention an unlimited plurality of notices can be exhibited, all of them being shown in a clear and perfectly comprehensible manner.

On many occasions the practical use of the device is so important that a widely-spread utilisation of the same becomes desirable.

For example should said device be arranged in all vehicles and correlated with the inner signalling members 11b thereof, so as to exhibit the ride speed at the outside, the traffic control would be much easier.

In addition the device can be exploited in a simple manner, even when circumstances impose notices to be modified suddenly, directly from the driver's seat.

The disclosed structure is not complicated in respect of the present technical knowledges and capabilities and does not involve high installation costs.

## Claims

1. A multi-purpose signalling device for vehicles, in particular cars, characterized in that it comprises:
   - a displayer panel (2) having a display surface (3) exhibiting a plurality of signalling elements (4) selectively operable between at least two conditions having different optical effects, said displayer panel (2) being positioned in a vehicle (5) so that said display surface (3) may be seen from the outside of said vehicle (5);
   - control means (7) for said displayer panel (2), adapted to selectively operate said signalling elements (4) and comprising at least a control element (8) that can be reached from the driver's seat (5c) of said vehicle (5);
   - and a power circuit (13) adapted to supply electric power to said displayer panel (2) and control means (7).

2. A multi-purpose signalling device according to Claim 1, in which arranged between said control means (7) and display surface (3) there are electronic circuits (9) adapted to store a plurality of signals and notices that can be individually recalled through said control means (7).

3. A multi-purpose signalling device according to Claim 2, in which said electronic circuits (9) are connected to an electric control circuit (12) acting on outer signalling members (11a) of said vehicle (5) in a manner adapted to receive commands addressed to said outer signalling members (11a), said electronic circuits (9), in the absence of different arrangements, activating signals on said displayer panel (2) which are substantially synchronous and congruent with those of said outer signalling members (11a).

4. A multi-purpose signalling device according to Claim 2, in which said electronic circuits (9) are connected to an electric control circuit (12) acting on inner signalling members (11b) of said vehicle (5) in a manner adapted to receive commands addressed to said inner signalling members (11b), said electronic circuits (9), in the absence of different arrangements, activating signals on said displayer panel (2) which are substantially synchronous and congruent with those of said inner signalling members (11b).

5. A multi-purpose signalling device according to Claim 1, in which said power circuit (13) is a circuit adapted to supply electric power to said vehicle (5) and connected to a battery (13a) of said vehicle (5).

6. A multi-purpose signalling device according to Claim 1, in which said control element (8) is embodied by a keyboard engaged to a dashboard of said vehicle (5).

7. A multi-purpose signalling device according to Claim 1, in which said control element (8) is embodied by a keyboard engaged to a steering wheel (10) of said vehicle, at least at one (10a) of the spokes thereof.

8. A multi-purpose signalling device according to Claim 1, in which said display surface (3) is disposed on the vehicle's glazing, at the base of the rear window (6) thereof.

9. A multi-purpose signalling device according to Claim 1, in which said display surface (3) is disposed substantially flush with the outer surface of said vehicle (5) and substantially integrated in the vehicle body.

10. A multi-purpose signalling device according to Claim 9, in which said display surface (3) is a light-reflecting surface.

11. A multi-purpose signalling device according to Claim 1, in which said signalling elements (4) are independent light emitting elements (LEDs) disposed close to each other in side by side relation so as to substantially define said display surface (3).

12. A multi-purpose signalling device according to Claim 1, in which said signalling elements (4) are liquid crystals, said liquid crystals substantially defining said display surface (3).

EP 0 511 494 A2

Fig.1

Fig.2

Fig.3